# EUROPEAN PATENT APPLICATION

(11) **EP 4 148 101 A1**
(43) Date of publication of application: **15.03.2023**
(21) Application number: 22194280.8
(22) Date of filing: 07.09.2022
(51) Int. Cl.: C10G 1/00, C10G 1/10, C10G 45/08, C10G 47/02, C10G 65/12, C10G 45/72, C10G 47/36, C10B 53/07

(54) **METHOD AND APPARATUS FOR PRODUCING HIGH VALUE-ADDED OIL FROM WASTE PLASTIC PYROLYSIS OIL**

(30) Priority: 10.09.2021 KR 20210120878
(71) Applicant: SK Innovation Co., Ltd., Seoul 03188 (KR); SK Geo Centric Co., Ltd., Jongno-gu Seoul 03161 (KR)
(72) Inventor: KIM, Ka Young, 34124 Daejeon (KR); KIM, Ok Youn, 34124 Daejeon (KR); PARK, Young Moo, 34124 Daejeon (KR); JEON, Hee Jung, 34124 Daejeon (KR)
(74) Representative: von Tietzen und Hennig, Nikolaus

(57) **Abstract**

A method and apparatus for refining waste plastic pyrolysis oil according to the present invention has an effect of converting the waste plastic pyrolysis oil into high value-added hydrocarbon oil having a high content of naphtha and kerosene, remarkably lowering a content of impurities such as chlorine, nitrogen, oxygen, and metals of the hydrocarbon oil, operating under milder process conditions, having excellent process efficiency, and having high process stability to be able to continuously produce refined oil.

## Description

### CROSS-REFERENCE TO RELATED APPLICATIONS

This application claims priority under 35 U.S.C. §119 Korean Patent Application No. 10-2021-0120878, filed on September, 10, 2021, in the Korean Intellectual Property Office, the disclosure of which is incorporated herein by reference in its entirety.

### TECHNICAL FIELD

The following disclosure relates to a method and apparatus for producing high value-added oil from waste plastic pyrolysis oil.

### BACKGROUND

Waste plastics are produced using petroleum as a raw material, and are mostly being disposed of as waste due to low recyclability. Since such wastes take a long time to be decomposed in a natural state, the wastes pollute soil and cause serious environmental pollution. As a method for recycling waste plastics, there is a method of pyrolyzing waste plastics and convert the waste plastics into usable oil. Such oil is called waste plastic pyrolysis oil.

However, since the pyrolysis oil obtained by pyrolyzing the waste plastics has a higher content of impurities such as chlorine, nitrogen, and metal compared to oil produced from crude oil by the conventional process, it is difficult to use the pyrolysis oil as a high value-added fuel such as gasoline and diesel oil. Therefore, a method different from the general crude oil refining process is required to convert waste plastics into usable oil.

In addition, the conventional method of refining waste plastic pyrolysis oil is difficult to convert the waste plastic pyrolysis oil into high value-added oil having a high content of naphtha and kerosene. Conventionally, Korean Patent Laid-Open Publication No. 10-2020-0144791 discloses a 'Method of hydrotreating heavy oil', but the patent is a method for refining heavy oil mainly containing an oil component having a boiling point of 340°C or higher. When the method is applied to waste plastic pyrolysis oil, process efficiency is lowered, and especially, it is difficult to convert the waste plastic pyrolysis oil into a high content of high value-added oil such as naphtha and kerosene.

Therefore, even when refined oil is produced from the waste plastic pyrolysis oil, a technology capable of increasing the content of components such as naphtha and kerosene in the refined oil and refining waste plastic pyrolysis oil with excellent process efficiency and refining effect is required.

### [Related Art Document]

### [Patent Document]

(Patent Document 1) Korean Patent Laid-open Publication No. 10-2020-0144791

### SUMMARY

An embodiment of the present invention is directed to providing a method and apparatus for refining waste plastic pyrolysis oil capable of converting the waste plastic pyrolysis oil into high value-added hydrocarbon oil having a high content of naphtha and kerosene.

Another embodiment of the present invention is directed to providing a method and apparatus for refining waste plastic pyrolysis oil capable of producing refined oil having a remarkably low content of impurities such as chlorine, nitrogen, oxygen, and metals.

Still another embodiment of the present invention is directed to providing a method and apparatus for refining waste plastic pyrolysis oil that can operate under milder process conditions, have excellent process efficiency, and have process stability to be able to continuously produce refined oil.

In one general aspect, a method of refining waste plastic pyrolysis oil includes: a reactant supply step of introducing the waste plastic pyrolysis oil containing a light oil component and a hydrogen gas into a first region of a reactor having a reaction space including a first region and a second region; a hydrotreating step of producing first refined oil from which impurities are removed by performing a hydrotreating reaction on the waste plastic pyrolysis oil by hydrogen gas under a hydrotreating catalyst in the first region; and a hydrocracking step of producing second refined oil including naphtha and kerosene by performing a hydrocracking reaction on the first refined oil and the hydrogen gas introduced from the first region under a hydrocracking catalyst in the second region.

A ratio of a liquid hourly space velocity (LHSV) of the first region and the second region may be 1:1 to 10.

In the hydrotreating step or the hydrocracking step, the reaction may be performed at a pressure of 10 to 120 bar.

In the hydrotreating step or the hydrocracking step, the reaction may be performed at a temperature of 200 to 500°C

In the hydrotreating step, the waste plastic pyrolysis oil and the hydrogen gas may react at a volume flow ratio of 1:300 to 3,000 based on 1 atm and 25°C.

The waste plastic pyrolysis oil may be hydrocarbon oil containing 1 to 40 wt% of first oil component having a boiling point of less than 150°C, 1 to 50 wt% of second oil component having a boiling point of 150°C or higher and less than 265°C, 1 to 50 wt% of third oil component having a boiling point of 265°C or higher and less than 340°C, and 1 to 60 wt% of fourth oil component having a boiling point of 340°C or higher, and the light oil component may include the first oil component and the second oil component.

The second refined oil produced in the hydrocracking step may contain 10 wt% or more of naphtha and 25 wt% or more of kerosene.

The hydrotreating catalyst and the hydrocracking catalyst may be heterogeneous catalysts fixed in each region.

The hydrotreating catalyst or the hydrocracking catalyst may be a catalyst in which an active metal containing any one or two or more selected from molybdenum, nickel, cobalt, and tungsten is supported on a support.

In another general aspect, an apparatus for refining waste plastic pyrolysis oil includes: a reactor including a first region in which the waste plastic pyrolysis oil and a hydrogen gas are introduced, and the waste plastic pyrolysis oil undergoes a hydrotreating reaction under a hydrotreating catalyst to produce first refined oil from which impurities are removed, and a second region in which a fluid containing first refined oil and a hydrogen gas are introduced from the first region, and second refined oil containing naphtha and kerosene is produced by performing a hydrocracking reaction on the first refined oil under a hydrocracking catalyst, and which is divided from the first region.

The reactor may have an inner space including the first region and the second region, and the second region is formed below the first region, and a fluid containing the first refined oil and an unreacted hydrogen gas discharged from the first region may be introduced into the second region.

The first region and the second region may be controlled to maintain a reaction pressure of 10 to 120 bar.

The reactor may be controlled so that a ratio of a liquid hourly space velocity (LHSV) of the first region and the second region is 1:1 to 10.

### BRIEF DESCRIPTION OF THE DRAWINGS

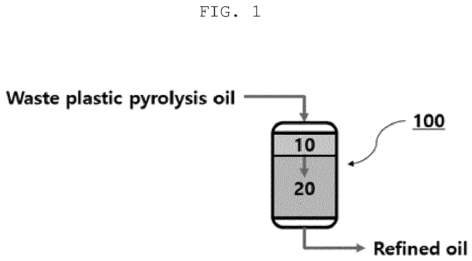

FIG. 1 is a diagram schematically illustrating a reactor of apparatus for refining waste plastic pyrolysis oil according to the present invention.

### [Detailed Description of Main Elements]

100: Reactor
10: First region
20: Second region

### DETAILED DESCRIPTION OF EMBODIMENTS

Hereinafter, a method and apparatus for producing high value-added oil from waste plastic pyrolysis oil according to the present invention will be described in detail with reference to the accompanying drawings.

The drawings provided herein are provided by way of example so that the spirit of the present invention may be sufficiently transferred to those skilled in the art. Therefore, the present invention is not limited to the accompanying drawings provided below, but may be modified in many different forms. In addition, the accompanying drawings suggested below will be exaggerated in order to clear the spirit and scope of the present invention.

Technical terms and scientific terms used herein have the general meaning understood by those skilled in the art to which the present invention pertains unless otherwise defined, and a description for the known function and configuration unnecessarily obscuring the gist of the present invention will be omitted in the following description and the accompanying drawings.

A singular form of a term used herein may be construed to include a plural form as well unless otherwise indicated.

Numerical ranges as used herein include all possible combinations of lower and upper limits and all values within that range, increments logically derived from the form and width of the defined ranges, all values defined herein, and upper and lower limits of numerical ranges defined in different forms. Unless otherwise defined in the specification of the present invention, values out of a numerical range that may occur due to experimental errors or rounding of values are also included in the defined numerical range.

"Including" mentioned herein is an open-ended description having an equivalent meaning to expressions such as "comprising", "containing", "having", "characterizing", and elements, materials, or processes not listed additionally are not excluded.

Unless specifically stated herein, the unit of % used means % by weight unless otherwise specified.

The term "layer" or "film" as used herein means that each material forms a continuum and has a relatively small dimension in a thickness compared to a width and a length. Accordingly, the term "layer" or "film" as used herein should not be interpreted as a two-dimensional flat plane.

Since waste plastic pyrolysis oil has different components and composition ratios from crude oil, when the conventional process of refining crude oil is applied to the refining of the waste plastic pyrolysis oil as it is, the process efficiency is lowered, and there is a limitation in that refined oil satisfying the desired content of components, specifically, refined oil having a high content of naphtha and kerosene may not be obtained.

Therefore, a method and apparatus of refining waste plastic pyrolysis oil according to the present invention may stably obtain hydrocarbon oil having a high content of high value-added oil component containing naphtha and kerosene by having process conditions described below, and may have an excellent process efficiency effect such as low energy consumption and minimized facility space.

In particular, the method and apparatus for refining waste plastic pyrolysis oil according to the present invention may perform refining and lightening of impurities in waste plastic pyrolysis oil at once, even if a boiling point separation process such as the conventional process of refining crude oil is not additionally performed in advance, thereby providing not only excellent process efficiency, but also a refined hydrocarbon oil having a high content of oil component of naphtha and kerosene.

A method of refining waste plastic pyrolysis oil according to the present invention includes: a reactant supply step of introducing the waste plastic pyrolysis oil containing a light oil component and a hydrogen gas into a first region of a reactor having a reaction space including a first region and a second region; a hydrotreating step of producing first refined oil from which impurities are removed by performing a hydrotreating reaction on the waste plastic pyrolysis oil and the hydrogen gas under a hydrotreating catalyst in the first region; and a hydrocracking step of producing second refined oil including naphtha and kerosene by performing a hydrocracking reaction on the first refined oil and the hydrogen gas introduced from the first region under a hydrocracking catalyst in the second region.

The waste plastic pyrolysis oil is processed by sequentially passing through the first region and the second region, and is converted into hydrocarbon oil, which is second refined oil having a high content of oil component of naphtha and kerosene. In this case, the first region and the second region may be formed inside a single reactor, and each region may be distinguished and divided according to the type of reaction to be performed as described below.

The first region is a region in which the waste plastic pyrolysis oil and the hydrogen gas undergo a hydrotreating (HDT) reaction, and the hydrotreating reaction is performed by bringing the waste plastic pyrolysis oil into contact with the hydrogen gas under the hydrotreating catalyst. The hydrotreating reaction may be performed in the first region to perform dechlorination, denitrification, desulfurization, and demetallation, and chlorine, nitrogen, sulfur, and other impurities other than metals may be removed, and some olefins may be removed. The first refined oil including the waste plastic pyrolysis oil and the unreacted hydrogen gas which undergo the hydrotreating reaction in this way is introduced into the second region.

The second region is a region in which the first refined oil containing the waste plastic pyrolysis oil and the unreacted hydrogen gas which undergo the hydrotreating reaction is introduced from the first region and undergoes a hydrocracking (HCK) reaction, and the hydrocracking reaction is performed by contacting the waste plastic pyrolysis oil and the hydrogen gas of the first refined oil under the hydrocracking catalyst. In this case, it is preferable that the first refined oil introduced into the second region reacts with a hydrogen gas that does not react in the hydrogen gas introduced into the first region, that is, unreacted hydrogen gas. However, in addition to the unreacted hydrogen gas, the hydrogen gas may be additionally supplied to the second region through a separate hydrogen gas supply line, and this additionally supplied hydrogen gas may react with the first refined oil. When the hydrogen gas is additionally supplied to the second region through a separate hydrogen gas supply line, it is possible to more precisely control flow ratios of the waste plastic pyrolysis oil and the hydrogen gas, and for example, the flow rate in the first region and the flow rate in the second region may be operated by being set differently.

In this way, the waste plastic pyrolysis oil sequentially passes through the first region in which the hydrotreating reaction is performed and the second region in which the hydrocracking reaction is performed, so there is an effect of obtaining high value-added hydrocarbon oil with excellent process efficiency as well as a very low content of impurities and an excellent yield of required components, that is, an excellent yield of oil components containing naphtha and kerosene.

The method of refining waste plastic pyrolysis oil according to the present invention may be performed through an apparatus for refining waste plastic pyrolysis oil including the reactor, and specifically, the apparatus includes a reactor including the first region and the second region formed in the inner space thereof. As a preferred example, as illustrated in FIG. 1, the reactor may include a reaction space where the first region in which the waste plastic pyrolysis oil and the hydrogen gas are introduced, and the waste plastic pyrolysis oil undergoes a hydrotreating reaction under a hydrotreating catalyst to produce the first refined oil from which impurities are removed, and the second region in which a fluid containing the first refined oil and the hydrogen gas are introduced from the first region, and the second refined oil containing naphtha and kerosene is produced by performing a hydrocracking reaction on the first refined oil under a hydrocracking catalyst, and which is divided from the first region. That is, the reactor has an inner space including the first region and the second region, the second region is formed below the first region, and the fluid containing the first refined oil and an unreacted hydrogen gas discharged from the first region may be introduced into the second region. Preferably, the first region may be formed in an upper portion of the reactor, and the second region may be formed in a lower portion of the reactor. The waste plastic pyrolysis oil may be introduced from the upper portion to the lower portion of the reactor and undergoes each reaction, and may be introduced into the upper portion of the reactor and react in the first region, introduced into the lower portion of the reactor and react in the second region, and then discharged to a lower side of the reactor

As a specific example, the reactor supplies the hydrogen gas to the first region formed therein, and may further include a first hydrogen gas supply line provided on an outer wall corresponding to an inner wall of the reactor forming the first region. More specifically, the first hydrogen gas supply line may be provided in connection with an upper end portion of the reactor.

In addition, as described above, since the hydrogen gas may be additionally supplied to the second region through the separate hydrogen gas supply line, as a specific example, the reactor may further include a second hydrogen gas supply line that supplies the hydrogen gas to the second region formed in the reactor, and is provided on the outer wall corresponding to the inner wall of the reactor forming the second region.

The reaction pressure in the present disclosure, specifically of the hydrotreating step or the hydrocracking step may be performed at a pressure of 120 bar or less, preferably 95 bar or less, or 70 bar or less, specifically 10 to 120 bar, preferably 15 to 95 bar, or 20 to 70 bar. When this is satisfied, it may be preferable in terms of achieving excellent energy efficiency and process efficiency such as low energy consumption while achieving the above-described effect.

In particular, the method or apparatus of refining waste plastic pyrolysis oil according to the present invention is performed at the reaction pressure, specifically of the hydrotreating step or the hydrocracking step of 120 bar or less, preferably 95 bar or less, or 70 bar or less, specifically 10 to 120 bar, preferably 15 to 95 bar, or 20 to 70 bar, in terms of maximizing the content of oil component of naphtha and kerosene, and it may be preferable that a ratio of liquid hourly space velocity (LHSV) of the first region and the second region is 1:1 to 10, specifically 1:1.5 to 10, and more specifically 1:2 to 10. That is, when both the ratio of the pressure in the above range and the LHSV in the above range are satisfied, it is possible to achieve the excellent energy efficiency and process efficiency and the excellent effect of removing impurities and further improve the yield of naphtha and kerosene.

A liquid hourly space velocity of the entire region including the first region and the second region, that is, a liquid hourly space velocity of the inner space of the reactor may be preferably 0.1 to 5 h⁻¹, specifically 0.2 to 3 h⁻¹, more specifically 0.3 to 2 h⁻¹. When the LHSV of the entire region satisfies the above range, the refined oil containing the high content of naphtha and kerosene may be stably obtained.

In the present disclosure, the reaction temperature, specifically, the reaction temperature of the hydrotreating step or the hydrocracking step is sufficient to implement the above-described effects, and may be sufficient as long as the hydrotreating reaction may be performed in the first region and the hydrocracking reaction may be performed in the second region, and the hydrotreating step or the hydrocracking step may be performed at a temperature of 200 to 500°C, specifically 250 to 450°C, more specifically 300 to 450°C. However, this is only described as a preferred example, and the present invention is not limited thereto.

In the present disclosure, the flow ratios of the waste plastic pyrolysis oil and the hydrogen gas, specifically, the flow ratios of the waste plastic pyrolysis oil and the hydrogen gas in the first hydrotreating step or the hydrocracking step are sufficient to implement the above-described effects, and may be sufficient as long as the reaction may be performed in each region. For example, the waste plastic pyrolysis oil and the hydrogen gas may react with a volume flow ratio of 1:300 to 3,000, specifically, a volume flow ratio of 1:400 to 2,500, more specifically, a volume flow ratio of 1:500 to 1,500 based on 1 atm and 25°C. However, this is only described as a specific example, and the present invention is not limited thereto.

As described above, the hydrotreating catalyst for performing the hydrotreating reaction in the first region and the hydrocracking catalyst for performing the hydrocracking reaction in the second region may be provided in each region, and each catalyst may be a heterogeneous catalyst fixed to each region.

As long as the "catalyst" referred to in the present disclosure is capable of performing each corresponding reaction, various known in the art may be used, and is not particularly limited. Specifically, the "hydrotreating catalyst" or "hydrocracking catalyst" referred to in the present disclosure may include an active metal having a catalytic ability for each reaction, and for example, may be a catalyst in which an active metal is supported on a support. The active metal may include any one or two or more selected from, for example, molybdenum, nickel, cobalt, tungsten, and the like as long as the active metal has a catalytic ability to perform the required reaction. In addition, the catalyst may further include sulfur so that the catalytic ability of the active metal is activated to be metal sulfide. The support may be any support having durability capable of supporting and holding the active metal, and may include, for example, any one or two or more selected from: a metal containing any one or two or more selected from silicon, aluminum, zircon, magnesium, thorium, beryllium, titanium, and the like; an oxide of the metal; and a carbon-based material containing any one or two or more selected from carbon black, activated carbon, graphene, carbon nanotubes, graphite, and the like. The active metal may be included in an amount of 0.01 to 20 wt%, specifically 0.1 to 10 wt%, based on the total weight of the catalyst. However, this is only described as a specific example, and the present invention is not limited thereto.

As a specific example, as the hydrotreating catalyst, various types of known catalysts may be used as long as catalysts may perform a hydrogenation reaction in which hydrogen is added to the hydrocarbon of the waste plastic pyrolysis oil. In detail, the hydrotreating catalyst may include any one or two or more selected from a hydrogenation desulphurization catalyst, a hydrogenation denitrification catalyst, a hydrogenation dechlorination catalyst, a hydrogenation demetallation catalyst, and the like. This hydrotreating catalyst may perform an olefin removal reaction while performing a desulphurization reaction, a denitrification reaction, a dechlorination reaction, and a demetallation reaction. In a specific embodiment, the hydrotreating catalyst may include an active metal containing molybdenum and nickel, and may be a catalyst including an active metal containing 0.1 to 30 wt% of molybdenum and 0.1 to 10 wt% of nickel based on the total weight of the catalyst, specifically, a catalyst including an active metal containing 1 to 15 wt% of molybdenum and 1 to 5 wt% of nickel. However, this is only described as a specific example, and the present invention is not limited thereto.

As a specific example, as the hydrotreating catalyst, various types of known catalysts may be used as long as catalysts may perform a decomposition reaction of hydrocarbon while hydrogen is added to the hydrocarbon of the waste plastic pyrolysis oil. In a specific embodiment, the hydrotreating catalyst may include an active metal containing nickel and tungsten, and may be a catalyst which is a support on which an active metal containing 0.1 to 10 wt% of nickel and 0.1 to 30 wt% of tungsten based on the total weight of the catalyst is supported, specifically, a catalyst which is a support on which an active metal containing 1 to 5 wt% of nickel and 1 to 15 wt% of tungsten is carried. However, this is only described as a specific example, and the present invention is not limited thereto.

The "waste plastic pyrolysis oil" referred to in the present disclosure means a hydrocarbon oil mixture produced by pyrolyzing waste plastic. In this case, the waste plastic may mean solid or liquid waste related to synthetic polymer compounds such as waste synthetic resin, waste synthetic fiber, waste synthetic rubber, and waste vinyl. The hydrocarbon oil mixture may contain impurities such as chlorine compounds, nitrogen compounds, and metal compounds in addition to the hydrocarbon oil, and may contain impurities in the form of compounds in which chlorine, nitrogen, or metal in the hydrocarbon are bonded, and may contain hydrocarbons in the form of olefin. As a specific example, the waste plastic pyrolysis oil may contain 300 ppm or more of nitrogen, 30 ppm or more of chlorine, 20 vol% of olefin (based on 1 atm and 25°C) or more, and 1 vol% or more of conjugated diolefin (based on 1 atm and 25°C) .

The waste plastic pyrolysis oil may include an oil component of various boiling point ranges, and the composition ratio of oil component contained in the waste plastic pyrolysis oil is different from general crude oil. As a specific example, the waste plastic pyrolysis oil may be hydrocarbon oil containing 1 to 40 wt% of first oil component having a boiling point of less than 150°C, 1 to 50 wt% of second oil component having a boiling point of 150°C or higher and less than 265°C, a 1 to 50 wt% of third oil component having a boiling point of 265°C or higher and less than 340°C, and 1 to 60 wt% of fourth oil component having a boiling point of 340°C or higher, and specifically, may be hydrocarbon oil containing 5 to 20 wt% of first oil component having a boiling point of less than 150°C, 15 to 30 wt% of second oil component having a boiling point of 150°C or higher and less than 265°C, 15 to 30 wt% of third oil component having a boiling point of 265°C or higher and less than 340°C, and 20 to 60 wt% of fourth oil component having a boiling point of 340°C or higher. In this case, the light oil component may include the first oil component and the second oil component, the "first oil component" referred to in the present disclosure may be naphtha, and the "second oil component" referred to in the present disclosure may be kerosene.

When the waste plastic pyrolysis oil containing oil component that satisfies the composition ratio in the above range is targeted, there is an effect of maximizing the yield of light oil (naphtha, kerosene), which is not well implemented especially for heavy oil. That is, when the above-described means are targeted for heavy oil, the above effect may not be exhibited well, and only when the waste plastic pyrolysis oil is used, it is possible to produce the refined oil having a remarkably high content of light oil such as naphtha and kerosene.

As described above, by using the method or apparatus according to the present invention, the content of impurities in the waste plastic pyrolysis oil may be remarkably reduced, and in particular, the content of light oil component containing naphtha and kerosene may be maximized. Specifically, the second refined oil produced in the second region, that is, the second refined oil produced in the hydrocracking step may be a hydrocarbon oil containing a high content of light oil component containing 10 wt% or more of naphtha and 25 wt% or more of kerosene.

Hereinafter, the present invention will be described in detail with reference to Examples, but these are for describing the present invention in more detail, and the scope of the present invention is not limited to the Examples below.

### [Example 1]

A hydrotreating/hydrocracking reaction apparatus having a hydrotreating catalyst fixed on an upper portion of a reactor and a hydrocracking catalyst fixed on a lower portion of the reactor was designed and operated to a cracked refined oil from which impurities are removed from waste plastic pyrolysis oil. In this case, the waste plastic pyrolysis oil is a hydrocarbon oil mixture that contains a high content of impurities of 200 ppm or more of nitrogen (N), 30 ppm or more of chorine (Cl), 20 vol% or more of olefin, and 1 vol% or more of conjugated diolefin and contains an oil component having a composition ratio of the following Table 3.

Specifically, as illustrated in FIG. 1, the waste plastic pyrolysis oil and hydrogen are introduced into the upper portion of the reactor, and the waste plastic pyrolysis oil undergo a hydrotreating with the hydrogen gas in a first region to remove olefin, and is converted into waste plastic pyrolysis oil from which non-metal impurities such as chlorine, nitrogen, sulfur, oxygen, and phosphorus, metal impurities such as iron, nickel, calcium, magnesium, chromium, potassium, zinc, aluminum, and silicon, are removed. In this case, as the hydrotreating catalyst, a NiMo sulfide-based catalyst was used.

A fluid containing the waste plastic pyrolysis oil from which the olefin and the impurities are removed and an unreacted hydrogen are introduced into the lower portion of the reactor, and the waste plastic pyrolysis oil from which the olefin and the impurities are removed and the unreacted hydrogen undergo a hydrocracking reaction in a second region to obtain refined oil containing naphtha and kerosene. In this case, as the hydrocracking catalyst, a NiW sulfide-based catalyst was used.

The specific form and operating conditions of the reactor are shown in Table 1 below.

**[Table 1]**

| | |
|---|---|
| Temperature (**°C**) | 370 |
| Pressure (bar) | 50 |
| H₂/Oil supply volume flow ratio | 840 |
| Total LHSV(Liquid hourly space velocity) (h⁻¹) of reactor | 0.7 |
| LHSV ratio of first region and second region | 1:2.3 |

### [Example 2-4]

As shown in Table 2 below, refined oil was obtained from waste plastic pyrolysis oil in the same manner as in Example 1, except that a reaction temperature among the operating conditions of a reactor in Example 1 was changed from 370°C to 380, 390 or 400°C as shown in Table 2 below.

**[Table 2]**

| | Example 1 | Example 2 | Example 3 | Example 4 |
|---|---|---|---|---|
| Temperature (**°C**) | 370 | 380 | 390 | 400 |

### [Example 5-6]

Refined oil was obtained from waste plastic pyrolysis oil in the same manner as in Example 1, except that a composition of an oil component of the waste plastic pyrolysis oil in Example 1 was controlled to be as shown in Table 3 below through fractional distillation.

### [Comparative Example 1]

Refined oil was obtained in the same manner as in Example 1, except that heavy oil instead of waste plastic pyrolysis oil in Example 1 was used as shown in Table 3 below.

**[Table 3]**

| Composition ratio of oil component in oil (wt%) | Example | | | | | | Comparative Example 1 |
|---|---|---|---|---|---|---|---|
| | 1 | 2 | 3 | 4 | 5 | 6 | |
| Oil feed | Waste plastic pyrolysis oil | | | | | | Heavy oil |
| First oil component (naphtha) having boiling point of less than 150°C | 11.2 | | | | 0 | 0 | 0 |
| Second oil component (kerosene) having boiling point of 150°C or higher and lower than 265°C | 24 | | | | 0 | 27.0 | 0 |
| Third oil component having boiling point of 265°C or higher and lower than 340°C | 20.7 | | | | 31.9 | 23.3 | 0 |
| Fourth oil component having boiling point of 340°C or higher | 44.1 | | | | 68.1 | 49.7 | 100 |

### [Comparative Example 2]

Refined oil was obtained in the same manner as in Example 1, except that a hydrocracking catalyst was excluded in Example 1.

Specifically, by designing and operating a hydrotreating reaction apparatus in which the same hydrotreating catalyst as the hydrotreating catalyst of Example 1 is fixed inside a reactor, cracked refined oil from which impurities were removed was obtained from waste plastic pyrolysis oil. The waste plastic pyrolysis oil and hydrogen are introduced into the reactor, and the waste plastic pyrolysis oil and the hydrogen undergo a hydrotreating reaction to remove olefin, and is converted into waste plastic pyrolysis oil from which non-metal impurities such as chlorine, nitrogen, sulfur, oxygen, and phosphorus, metal impurities such as iron, nickel, calcium, magnesium, chromium, potassium, zinc, aluminum, and silicon, are removed.

### [Evaluation] Composition of refined oil according to reactor structure, operating condition, and feed type

The contents of naphtha and kerosene in the refined oil prepared in Examples 1 to 6 and Comparative Examples 1 and 2 were measured, and the results are shown in Table 4 below.

**[Table 4]**

| | | Example | | | | | | Comparati ve Example | |
|---|---|---|---|---|---|---|---|---|---|
| | | 1 | 2 | 3 | 4 | 5 | 6 | 1 | 2 |
| Oil feed | Waste plastic pyrolysis oil | ○ | | | | | | X | ○ |
| | Heavy oil | X | | | | | | ○ | X |
| First oil component (naphtha) having boiling point of less than 150°C | | 11.2 | | | | 0 | 0 | 0 | 11.2 |
| Second oil component (kerosene) having boiling point of 150°C or higher and lower than 265°C | | 24 | | | | 0 | 27. 0 | 0 | 24 |
| Third oil component having boiling point of 265°C or higher and lower than 340°C | | 20.7 | | | | 31. 9 | 23. 3 | 0 | 20.7 |
| Fourth oil component having boiling point of 340°C or higher | | 44.1 | | | | 68. 1 | 49. 7 | 100 | 44.1 |
| React or | Hydrotreati ng catalyst | ○ | | | | | | | |
| | Hydrocracki ng catalyst | ○ | | | | | | | X |
| Reaction temperature (**°C**) | | 370 | 380 | 390 | 400 | 370 | | 370 | |
| Reaction pressure (bar) | | 50 | | | | | | | |
| LHSV ratio of first region and second region | | 1:2.3 | | | | | | | |
| Content of naphtha in refined oil (wt%) | | 12. 1 | 11. 4 | 12. 8 | 17. 0 | 2.7 | 5.4 | 0 | 5.5 |
| Content of kerosene in refined oil (wt%) | | 27. 6 | 28. 4 | 29. 8 | 33. 0 | 7.4 | 15. 4 | 3.6 | 25.1 |

A method and apparatus for refining waste plastic pyrolysis oil according to the present invention have an effect of converting the waste plastic pyrolysis oil into high value-added hydrocarbon oil having a high content of naphtha and kerosene.

In addition, a method and apparatus for refining waste plastic pyrolysis oil according to the present invention have an effect of producing refined oil having a remarkably low content of impurities such as chlorine, nitrogen, oxygen, and metal.

Furthermore, a method and apparatus for refining waste plastic pyrolysis oil according to the present invention have an effect of operating under milder process conditions, having excellent process efficiency, and having high process stability to be able to continuously produce refined oil.

## Claims

1. A method of refining waste plastic pyrolysis oil, comprising:
a reactant supply step of introducing the waste plastic pyrolysis oil containing a light oil component and a hydrogen gas into a first region of a reactor having a reaction space including a first region and a second region;
a hydrotreating step of producing first refined oil from which impurities are removed by performing a hydrotreating reaction by the hydrogen gas on the waste plastic pyrolysis oil under a hydrotreating catalyst in the first region; and
a hydrocracking step of producing second refined oil including naphtha and kerosene by performing a hydrocracking reaction on the first refined oil and the hydrogen gas introduced from the first region under a hydrocracking catalyst in the second region

2. The method of claim 1, wherein, in the hydrotreating step or the hydrocracking step, the reaction is performed at a pressure of 10 to 120 bar.

3. The method of claim 2, wherein a ratio of a liquid hourly space velocity (LHSV) of the first region and the second region is 1:1 to 10.

4. The method of claim 1, wherein, in the hydrotreating step or the hydrocracking step, the reaction is performed at a temperature of 200 to 500 °C

5. The method of claim 1, wherein, in the hydrotreating step, the waste plastic pyrolysis oil and the hydrogen gas react at a volume flow ratio of 1:300 to 3,000 based on 1 atm and 25°C.

6. The method of claim 1, wherein the waste plastic pyrolysis oil is hydrocarbon oil containing 1 to 40 wt% of first oil component having a boiling point of less than 150°C, 1 to 50 wt% of second oil component having a boiling point of 150°C or higher and less than 265°C, 1 to 50 wt% of third oil component having a boiling point of 265°C or higher and less than 340°C, and 1 to 60 wt% of fourth oil component having a boiling point of 340°C or higher, and
the light oil component includes the first oil component and the second oil component.

7. The method of claim 1, wherein the second refined oil produced in the hydrocracking step contains 10 wt% or more of naphtha and 25 wt% or more of kerosene.

8. The method of claim 1, wherein the hydrotreating catalyst and the hydrocracking catalyst are heterogeneous catalysts fixed in each region.

9. The method of claim 8, wherein the hydrotreating catalyst or the hydrocracking catalyst is a catalyst in which an active metal containing any one or two or more selected from molybdenum, nickel, cobalt, and tungsten is supported on a support.

10. An apparatus for refining waste plastic pyrolysis oil, comprising:
a reactor including a first region in which the waste plastic pyrolysis oil and a hydrogen gas are introduced, and the waste plastic pyrolysis oil undergoes a hydrotreating reaction under a hydrotreating catalyst to produce first refined oil from which impurities are removed, and
a second region in which a fluid containing first refined oil and a hydrogen gas are introduced from the first region, and second refined oil containing naphtha and kerosene is produced by performing a hydrocracking reaction on the first refined oil under a hydrocracking catalyst, and which is divided from the first region.

11. The apparatus of claim 10, wherein the reactor has an inner space including the first region and the second region, and the second region is formed below the first region, and
a fluid containing the first refined oil and an unreacted hydrogen gas discharged from the first region introduces into the second region.

12. The apparatus of claim 10, wherein the first region and the second region are controlled to maintain a reaction pressure of 10 to 120 bar.

13. The apparatus of claim 10, wherein the reactor is controlled so that a ratio of a liquid hourly space velocity (LHSV) of the first region and the second region is 1:1 to 10.
